# EUROPEAN PATENT APPLICATION

(11) **EP 0 635 214 A1**
(43) Date of publication of application: **25.01.1995**
(21) Application number: 94305344.7
(22) Date of filing: 20.07.1994
(51) Int. Cl.: A23B 4/005, A23B 4/00

(54) **Improvements relating to saleable meat products**

(30) Priority: 20.07.1993 GB 9315020
(71) Applicant: SUN VALLEY POULTRY LIMITED, Hereford, Worchestershire HR4 9PB (GB)
(72) Inventor: Jull, Harvey William, Bodenham, Herefordshire HR1 3HT (GB); Clarke, Edward Thomas, Herefordshire HR1 3BT (GB); Lane, Christopher David, Hereford HR4 8DL (GB)
(74) Representative: Lally, William

(57) **Abstract**

A saleable meat product (e.g. a portion of poultry) is partially cooked at a first location, such as a processing plant, and is transported to a second location, which may be at a retail outlet, at which the product is subject to re- heating. For example, a portion of poultry may be cooked for a short period of time to ensure the elimination of bacteria, removed from an oven, and within a short period of time, whilst the poultry is still hot, may be bagged, sealed and cooled. The bagged meat product will then be delivered to a supermarket, and re-heated whilst within the bag, from which the product may be removed, or sold whilst retained within the sealed bag.

## Description

### Description of Invention

This invention is concerned with improvements relating to saleable meat products.

Meat products are conventionally delivered to a retail outlet such as a supermarket either in raw or cooked but cold condition, to be sold as such in the retail outlet.

There is undoubtedly a consumer/purchaser desire for meat products in a hot condition, perceived as being freshly cooked. However, conventional health regulations prevent this from being effected conveniently and efficiently within a retail outlet premises.

In particular health regulations require that a "cordon-sanitaire" be established between raw meat products and cooked meat products, and this is difficult to comply with where the raw meat products are to be cooked immediately prior to sale. One solution is to use an oven having an inlet, through which raw meat products are entered for cooking, the inlet being provided on one side of a partition, and an outlet from which cooked meat products may be taken from the oven, on the other side of the partition. However this requires a significant amount of constructional or building work to be carried out, to the disruption of the retail outlet.

According to this invention there is provided a method of providing a hot meat product in a retail outlet, involving the steps:
(a) at least partially cooking the meat product at a first location;
(b) transporting said meat product to a second location spaced from the first location and
(c) reheating said meat product at said second location.

By the term "spaced from" as used herein we mean a distance greater than that over which food is conventionally transported between cooking stages, specifically greater than 10 metres, as will be involved when the two locations are in different areas of one building, probably greater than 100 metres, when different but possibly adjacent buildings will be utilised, but most likely greater than 1000 metres, when the two cooking stages are carried out at widely spaced locations.

Thus where the second location is a supermarket store, the first location may be a meat processing factory. However if desired said first location may be at said retail outlet, being spaced from said second location by a cordon-sanitaire.

Preferably however the meat product is completely cooked at said first location, the cordon-sanitaire being provided at said first location between the fresh meat products delivered to the cooking means, and the cooked meat products delivered thereby.

Preferably the meat product is sealed in a covering subsequent to the step (a), such as by a sealable wrapping such as "melinex", or similar material, or may involve sealing the product in a bag or pouch which may also be of a material such as "melinex".

Thus, where the meat product is reheated at said second location whilst in said sealed wrapping, said initial step of at least partially cooking the meat product as said first location may be an incomplete cooking operation, said cooking of the meat product being completed at the reheating stage, the sealed wrapping providing the "cordon-sanitaire" as required by health regulations.

Preferably the meat product is bagged whilst still hot - preferably whilst still above a temperature of 70°C, and preferably with 15 minutes of completion of said initial cooking operation, whereby juices produced by the meat product are retained with the meat product within the bag. Thus during storage and transportation, some marinading of the meat product within its own juices may take place.

Preferably subsequent to bagging the product is cooled e.g. to 4°C or less, conveniently by blast chilling.

The meat product may be removed from the bag at said second location and reheated on e.g. a barbecue or open spit, so that shoppers are encouraged to purchase by the sight, sound and smell of the cooking taking place.

Alternatively the meat product may be heated whilst in the bag, thereby being cooked in its own juices.

Said reheating may involve wet or dry heating, such as to attain a core temperature of at least 70°C, preferably in excess of 82°C. Preferably heating is effected at a temperature of 120°C to 200°C, as may be determined by the temperature stability of the bagging material.

Preferably the product is cooked in a moist atmosphere at a humidity of between 35% and 45%.

Alternatively the meat product may be heated by other methods, e.g. by the use of microwave radiation.

Three examples will now be given, which are preferred embodiments of the invention having been selected for the purposes of illustrating the invention by way of example.

### Example 1

Portions of poultry, which may be leg, breast, drumstick, thigh are injected with 15% by weight of brine, together with flavour enhancing materials, and after being held for a short period of time are cooked to a degree sufficient to ensure the elimination of bacteria. Within 15 minutes of removal from the oven, and whilst the portions are at a temperature of at least 70°C, the portions are bagged in a pouch of transparent material, which is vacuum sealed, and cooled to 4°C by blast chilling.

If desired, the surface of the sealed bag may be treated to eliminate any residual surface contamination.

The bagged meat products are delivered to a supermarket, and are reheated whilst being retained within the bags in a combination oven operating at a temperature of about 120°C, for a sufficient period of time as to ensure a core temperature of 82°C.

Conveniently, the product may then be removed from the sealed bags, and sold open, or may be sold whilst being retained within the sealed bag.

### Example 2

A whole chicken is injected with by about 13% by weight of brine, held for a period of time, and then cooked whilst whole. On completion of the cooking operation the chicken is packed within a melinex bag, the bagging operation taking place within 15 minutes of removal from the oven, and whilst a temperature of at least 70°C is maintained. The bag is evacuated of air, and sealed, and the bagged meat product is delivered to a supermarket.

The bagged chicken is reheated in the supermarket in a combination oven operating at a temperature of 200°C, until a core temperature of 82°C has been attained. Conveniently the hot chicken is sold whilst in the bag.

### Example 3

Chicken portions are cooked to an extent sufficient to eliminate bacteria, and bagged as set out in Example 1. At arrival at a supermarket they are removed from the bags, and are reheated on a barbecue or spit roast, enabling them to be purchased for immediate eating.

Conveniently the second location comprised means for effecting Examples 1, 2 and 3, whereby purchasers of reheated poultry portions or whole birds whilst still bagged will be encouraged to by the sight/sound/smell of the cooking operation which is taking place by way of Example 2.

It is to be appreciated that whilst the above invention has been devised primarily for meat products afforded by poultry, other meat products may be used with advantage, including small joints of lamb, small joints of pork, spare ribs, and the like.

## Claims

1. A method of providing a hot meat product in a retail outlet, involving the steps:
a) at least partially cooking the meat product at a first location;
b) transporting said meat product to a second location spaced from the first location; and
c) re-heating said meat product at said second location.

2. A method according to Claim 1 wherein the first location is a meat processing factory.

3. A method according to one of Claims 1 and 2 wherein the second location is a supermarket store.

4. A method according to Claim 1 wherein the first and second locations are at said retail outlet.

5. A method according to any one of the preceding claims wherein the meat product is completely cooked at said first location.

6. A method according to any one of the preceding claims wherein the meat produce is sealed in a covering subsequent to the step a).

7. A method according to Claim 6 wherein the meat product is re-heated at said second location whilst in said sealed wrapping.

8. A method according to Claim 1 wherein the meat product is subjected to an incomplete cooking operation at stage a), said cooking of the meat product being completed at the re-heating stage.

9. A method according to any one of the preceding claims involving the step of bagging the product whilst still hot.

10. A method according to Claim 9 wherein the product is bagged whilst above a temperature of 7°C, preferably within 15 minutes of completion of said initial cooking operation, and preferably cooled to a temperature of (e.g.) 4°C or less subsequent to bagging.
